# EUROPÄISCHE PATENTSCHRIFT

(11) **EP 1 223 146 B1**
(45) Veröffentlichungstag und Bekanntmachung des Hinweises auf die Patenterteilung: **01.10.2003**
(21) Anmeldenummer: 02000119.4
(22) Anmeldetag: 03.01.2002
(51) Int. Cl.: C01B 33/035, C30B 29/06

(54) **Vorrichtung und Verfahren zur Herstellung eines polykristallinen Siliciumstabes**
Apparatus and process for producing polycrystalline silicon rods
Appareillage et procédé pour la production des barreaux de silicium polycristallin

(30) Priorität: 11.01.2001 DE 10101040
(43) Veröffentlichungstag der Anmeldung: 17.07.2002
(73) Patentinhaber: Wacker-Chemie GmbH, 81737 München (DE)
(72) Erfinder: Hertlein, Harald, 84508 Burgkirchen (DE); Hesse, Karl, Dr., 84489 Burghausen (DE); Frauenknecht, Axel, 84489 Burghausen (DE)
(74) Vertreter: Potten, Holger

(56) Entgegenhaltungen:
- DE-A- 2 328 303
- US-A- 4 248 925
- US-A- 5 593 465
- US-A- 5 688 155
- PATENT ABSTRACTS OF JAPAN vol. 1996, no. 11, 29. November 1996 (1996-11-29) & JP 08 191096 A (SUMITOMO METAL IND LTD), 23. Juli 1996 (1996-07-23)
- PATENT ABSTRACTS OF JAPAN vol. 018, no. 062 (M-1553), 2. Februar 1994 (1994-02-02) & JP 05 285735 A (IBIDEN CO LTD), 2. November 1993 (1993-11-02)

## Beschreibung

Die Erfindung betrifft eine Vorrichtung und ein Verfahren zur Herstellung eines polykristallinen Siliciumstabes unter Einsatz einer Kohleelektrode mit definierten Werkstoffeigenschaften.

Hochreines polykristallines Silicium (Polysilicium) als Ausgangsmaterial für die Herstellung von elektronischen Bauteilen und Solarzellen, gewinnt man in der Regel durch thermische Zersetzung oder Wasserstoffreduktion eines Abscheidegases. In der Regel werden dabei Chlorsilane, wie beispielsweise Trichlorsilan als Abscheidegas verwendet. Die thermische Zersetzung von Trichlorsilan unter Beteiligung von reduzierendem Wasserstoff mit nachfolgender Abscheidung von hochreinem Silicium an dünnen Siliciumstäben ist unter dem Namen "Siemens-Prozeß" bekannt. Nach diesem Prozeß wird Polysilicium weltweit in Polysilicium Abscheidevorrichtungen produziert (US 4,173,944).

In der gebräuchlichsten Ausführungsform bestehen solche Vorrichtungen im wesentlichen aus einer metallischen Grundplatte und einer kühlbaren Glocke, die auf die Grundplatte gesetzt ist, so daß ein geschlossener Reaktionsraum im Inneren der Glocke entsteht. Die Abscheidevorrichtung muß gasdicht verschließbar sein, da die Abscheidegase korrosiv wirken und im Gemisch mit Luft zur Selbstentzündung neigen. Die Grundplatte ist mit Halterungen versehen, mit deren Hilfe die Trägerkörper im Reaktionsraum gehalten werden. Als Trägerkörper dienen üblicherweise dünne Siliciumstäbe, die durch direkten Stromdurchgang auf die notwendige Abscheidetemperatur aufgeheizt werden. In der Regel sind zwei benachbarte Stäbe an ihren freien, den gehaltenen Fußenden gegenüberliegenden Enden durch eine Brücke zu einem U-förmigen Trägerkörper verbunden. Die Zuführung des elektrischen Stroms erfolgt durch das die Stabfüße des U-förmigen Trägerkörpers haltende Halterungspaar.

Zu einer Halterung gehört eine Stromdurchführung, die durch die Grundplatte führt und die außerhalb der Abscheidevorrichtung an eine Stromquelle angeschlossen ist. Innerhalb der Abscheidevorrichtung ist die Stromdurchführung als Elektrodenfassung ausgebildet oder mit einer separaten Elektrodenfassung fest verbunden. Auf die Elektrodenfassung ist eine Kohleelektrode aufgesetzt, die in den Reaktionsraum gerichtet ist. Die Kohleelektrode weist üblicherweise oben eine Aussparung auf, in die der Stabfuß des Trägerkörpers gesteckt wird. Die Halterungen sind so ausgestaltet, daß die gehaltenen Trägerkörper fixiert sind und nicht bewegt werden können. Die Stromdurchführung und gegebenenfalls auch die Elektrodenfassung werden gekühlt. Damit wird verhindert, daß sich Halbleitermaterial auf der Halterung des Trägerkörpers abscheidet.

Bei der Herstellung großer polykristalliner Siliciumstäbe ist relativ häufig zu beobachten, daß sie im Endstadium der Abscheidung oder während der Abkühlphase nach der Abscheidung aus den Halterungen kippen (umfallen) und/oder Beschädigungen im Bereich der Stabfußenden aufweisen. Dieses Phänomen verzögert nicht nur die Weiterbearbeitung der Halbleiterkörper zu den überwiegend in der Elektronikindustrie benötigten Produkten, sondern verursacht auch einen hohen finanziellen Schaden, da gekippte Siliciumstäbe nicht mehr wie vorgesehen weiterverarbeitet werden können. Zur Lösung dieses Problems wird in US-A-5,593,465 vorgeschlagen, mindestens ein Federelement zwischen der Stromdurchführung und der Elektrodenfassung anzuordnen welches eine Bewegung der Elektrodenfassung relativ zur Stromdurchführung gestattet und diese Bewegung abfedert. Diese Lösung ist jedoch mit großem technischen Aufwand und damit erheblichen Kosten verbunden.

Die Aufgabe der vorliegenden Erfindung bestand darin, eine Vorrichtung zur Abscheidung von Halbleitermaterial auf einem aufgeheizten Trägerkörper bereitzustellen, die ohne aufwändige Umbaumaßnahmen an einer üblichen Abscheidevorrichtung die beschriebenen Nachteile weitgehend verhindert.

Die Aufgabe wird gelöst durch eine Vorrichtung, mit einer durch die Grundplatte der Abscheidevorrichtung geführten, ortsfesten Stromdurchführung und einer Elektrodenfassung mit einer Unterseite, die über der Stromdurchführung angeordnet ist, und einer Oberseite, die mit einer Kohleelektrode verbunden ist, in die ein Trägerkörper gesteckt werden kann, die dadurch gekennzeichnet ist, daß die Kohleelektrode eine Wärmeleitfähigkeit > 145W/m*K, und einen Wärmeausdehnungskoeffizient, der an den Wärmeausdehnungskoeffizient von Silicium angepasst ist, hat.

Die Wärmeleitfähigkeit der Kohleelektrode wird möglichst groß gewählt, um die auftretenden Zug - Druckspannungen im Stabfuß zu verringern. Vorzugsweise ist die Wärmeleitfähigkeit größer 145 W/m*K. Besonders bevorzugt ist die Wärmeleitfähigkeit größer 165 W/m*K, insbesondere bevorzugt liegt die Wärmeleitfähigkeit bei 170 W/m*K. Der Wert 170 W/m*K entspricht der Kohleelektrode mit der höchsten Wärmeleitfähigkeit aller bisher testbaren Kohlenarten. Mit dieser wurde bisher das beste Ergebnis erzielt. Es ist jedoch anzunehmen, dass mit einer Kohleelektrode mit noch höherer Wärmeleitfähigkeit noch bessere Ergebnisse erzielbar sind.

Der Wärmeausdehnungskoeffizient ist dem von Polysilicium angepasst. Vorzugsweise liegt der Wärmeausdehnungskoeffizient daher zwischen 2x10⁻⁶ und 6x10⁻⁶. Besonders bevorzugt liegt der Wärmeausdehnungskoeffizient zwischen 3,0x10⁻⁶ und 3,6x10⁻⁶ insbesondere bevorzugt liegt der Wärmeausdehnungskoeffizient bei 3, 3x10⁻⁶.

Bei Untersuchungen zeigte sich, daß in den meisten Fällen ein Zerspringen des Stabfußes zum Umfallen der Polysiliciumstäbe geführt hatte. Allein durch den Austausch der üblichen Kohleelektroden gegen Kohleelektroden mit den genannten Werkstoffeigenschaften konnte das Auftreten von Stabfußabrissen signifikant reduziert werden. Das Umfallen der polykristallinen Siliciumstäbe aufgrund zerplatzter Stabfüße wird durch die erfindungsgemäße Vorrichtung verhindert.

Die Erfindung betrifft ferner ein Verfahren zur Herstellung von polykristallinen Siliciumstäben welches in einer erfindungsgemäßen Vorrichtung in an sich bekannter Art und Weise durchgeführt wird.

Dies Verfahren ist dadurch gekennzeichnet, daß in einem üblichen Siemens Prozeß eine Kohleelektrode mit einer Wärmeleitfähigkeit > 145W/m*K, und einem Wärmeausdehnungskoeffizient, der an den Wärmeausdehnungskoeffizient von Silicium angepasst ist, eingesetzt wird.

Das Verfahren wird, wie im Stand der Technik üblich durchgeführt. Als Trägermaterial dienen dünne Siliciumstäbe, die durch direkten Stromdurchgang vorzugsweise auf einen Abscheidetemperaturbereich zwischen 900 bis 1200°C aufgeheizt werden. Die chlorsilanmengen betragen vorzugsweise 10 bis 1400 kg/h oder mehr und die Wasserstoffmengen vorzugsweise 10 bis 800m³/h oder mehr. Im Gegensatz zur bisherigen Kohleelektrode mit einer Wärmeleitfähigkeit von 75 W/m*K und einem Wärmeausdehnungskoeffizient von 4x10⁻⁶, bei deren Einsatz die Stabfüße teilweise zersprungen sind, wird zur Verringerung der Zug-Druckspannungen im Stabfuß eine Kohleelektrode mit erfindungsgemäßer Wärmeleitfähigkeit und erfindungsgemäßem Wärmeausdehnungskoeffizient eingesetzt.

Das erfindungsgemäße Verfahren ist aus folgenden Gründen wirtschaftlicher als der herkömmliche Siemens Prozeß:
- Zeiteinsparung (niedrigere Personalkosten)
- Vermeidung von Sicherheitsrisiken (weniger Arbeitsunfälle)
- Steigerung der Ausbringung (Reduzierung der Chargenwechselzeit)
- Steigerung der Ausbeute (weniger Polysiliciumabfall, weniger Polysiliciumfeinbruch)

Die Erfindung betrifft ferner die Verwendung einer Kohleelektrode mit den bereits genannten Materialeigenschaften zur Herstellung von polykristallinem Silicium.

Solche Kohleelektroden sind käuflich beispielsweise bei Schunk Kohlenstofftechnik GmbH (D-35339 Giessen) oder SGL Carbon Group (SGL CARBON GmbH, Werk Ringsdorf, Drachenburgstraße 1, D-53170 Bonn) erhältlich.

Insbesondere betrifft die Erfindung die Verwendung einer Kohleelektrode mit einer Wärmeleitfähigkeit > 145W/m*K, und einem Wärmeausdehnungskoeffizient der an den Wärmeausdehnungskoeffizient von Silicium angepasst ist, zur Herstellung von polykristallinem Silicium mittels des Siemens Prozesses.

Das folgende Beispiel dient der weiteren Beschreibung der Erfindung :

### Beispiel:

Zur Herstellung von polykristallinen Siliciumstäben wurden abwechselnd 14 Anlagen mit herkömmlichen Grafitelektroden und mit Grafitelektroden mit einer Wärmeleitfähigkeit von 170 W/m*K und einem Wärmeausdehnungskoeffizient von 3,3x10⁻⁶ unter ansonsten gleichen Bedingungen betrieben. (Abscheidetemperaturbereich zwischen 900 bis 1200°C, Chlorsilanmenge zwischen 10 bis 1400 kg/h und die Wasserstoffmenge zwischen 10 bis 800m³/h). Während von 98 Prozesschargen die mittels einer üblichen Vorrichtung erzeugt wurden 15 Chargen umfielen, fiel von 98 Prozesschargen die mittels einer erfindungsgemäßen Vorrichtung erzeugt wurden keine um.

## Patentansprüche

1. Vorrichtung zur Abscheidung von Halbleitermaterial auf einem aufgeheizten Trägerkörper mit einer durch die Grundplatte der Abscheidevorrichtung geführten, ortsfesten Stromdurchführung und einer Elektrodenfassung mit einer Unterseite, die über der Stromdurchführung angeordnet ist, und einer Oberseite, die mit einer Kohleelektrode verbunden ist, in die ein Trägerkörper gesteckt werden kann, die **dadurch gekennzeichnet ist, daß** die Kohleelektrode eine Wärmeleitfähigkeit > 145W/m*K, und einen Wärmeausdehnungskoeffizient, der an den Wärmeausdehnungskoeffizient von Silicium angepaßt ist, hat.

2. Vorrichtung gemäß Anspruch 1, **dadurch gekennzeichnet, daß** die Wärmeleitfähigkeit der Kohleelektrode größer 165 W/m*K liegt.

3. Vorrichtung gemäß Anspruch 1, **dadurch gekennzeichnet, daß** die Wärmeleitfähigkeit der Kohleelektrode bei 170 W/m*K liegt.

4. Vorrichtung gemäß einem der Ansprüche 1 bis 3, **dadurch gekennzeichnet, daß** der Wärmeausdehnungskoeffizient zwischen 2x10⁻⁶ und 6x10⁻⁶ liegt.

5. Vorrichtung gemäß einem der Ansprüche 1 bis 3 **dadurch gekennzeichnet, daß** der Wärmeausdehnungskoeffizient zwischen 3,0x10⁻⁶ und 3,6x10⁻⁶ liegt.

6. Vorrichtung gemäß einem der Ansprüche 1 bis 3 **dadurch gekennzeichnet, daß** der Wärmeausdehnungskoeffizient bei 3,3x10⁻⁶ liegt.

7. Verfahren zur Herstellung von polykristallinen Siliciumstäben, das **dadurch gekennzeichnet ist, daß** in einem üblichen Siemens Prozeß eine Kohleelektrode mit einer Wärmeleitfähigkeit > 145W/m*K, und einem Wärmeausdehnungskoeffizient der an den Wärmeausdehnungskoeffizient von Silicium angepasst ist, eingesetzt wird.

8. Verwendung einer Kohleelektrode mit einer Wärmeleitfähigkeit > 145W/m*K, und einem Wärmeausdehnungskoeffizient, der an den Wärmeausdehnungskoeffizient von Silicium angepasst ist, zur Herstellung von polykristallinem Silicium.

## Claims

1. Device for depositing semiconductor material on a heated substrate body, having a stationary current leadthrough, which is guided through the baseplate of the deposition device, and an electrode mount with an underside, which is arranged above the current leadthrough, and an upper side, which is connected to a carbon electrode into which a substrate body can be fitted, **characterized in that** the carbon electrode has a thermal conductivity of > 145 W/m*K and a coefficient of thermal expansion which is matched to the coefficient of thermal expansion of silicon.

2. Device according to Claim 1, **characterized in that** the thermal conductivity of the carbon electrode is greater than 165 W/m*K.

3. Device according to Claim 1, **characterized in that** the thermal conductivity of the carbon electrode is 170 W/m*K.

4. Device according to one of Claims 1 to 3, **characterized in that** the coefficient of thermal expansion is between 2x10⁻⁶ and 6x10⁻⁶.

5. Device according to one of Claims 1 to 3, **characterized in that** the coefficient of thermal expansion is between 3.0x10⁻⁶ and 3.6x10⁻⁶.

6. Device according to one of Claims 1 to 3, **characterized in that** the coefficient of thermal expansion is 3.3x10⁻⁶.

7. Method for producing polycrystalline silicon ingots, **characterized in that** in a conventional Siemens process a carbon electrode with a thermal conductivity of > 145 W/m*K and a coefficient of thermal expansion matched to the coefficient of thermal expansion of silicon is used.

8. Use of a carbon electrode with a thermal conductivity of > 145 W/m*K and a coefficient of thermal expansion which is matched to the coefficient of thermal expansion of silicon for the production of polycrystalline silicon.

## Revendications

1. Dispositif de précipitation d'un matériau semiconducteur sur un corps porteur réchauffé muni d'une traversée de courant fixe qui passe à travers la plaque de base du dispositif de précipitation et d'un porte-électrode, comportant un côté inférieur qui est disposé au-dessus de la traversée de courant et un côté supérieur qui est relié avec une électrode au carbone, dans laquelle peut être inséré un corps porteur, lequel est **caractérisé en ce que** l'électrode au carbone présente une conductivité thermique > 145 W/m*K et un coefficient de dilatation thermique qui est accordé sur le coefficient de dilatation thermique du silicium.

2. Dispositif selon la revendication 1, **caractérisé en ce que** la conductivité thermique de l'électrode au carbone est supérieure à 165 W/m*K.

3. Dispositif selon la revendication 1, **caractérisé en ce que** la conductivité thermique de l'électrode au carbone est de l'ordre de 170 W/m*K.

4. Dispositif selon l'une des revendications 1 à 3, **caractérisé en ce que** le coefficient de dilatation thermique est compris entre 2x10⁻⁶ et 6x10⁻⁶.

5. Dispositif selon l'une des revendications 1 à 3, **caractérisé en ce que** le coefficient de dilatation thermique est compris entre 3,0x10⁻⁶ et 3,6x10⁻⁶.

6. Dispositif selon l'une des revendications 1 à 3, **caractérisé en ce que** le coefficient de dilatation thermique est de l'ordre de 3,3x10⁻⁶.

7. Procédé de fabrication de barres en silicium polycristallin, lequel est **caractérisé en ce qu'**une électrode au carbone ayant une conductivité thermique > 145 W/m*K et un coefficient de dilatation thermique qui est accordé sur le coefficient de dilatation thermique du silicium est utilisée dans un procédé Siemens traditionnel.

8. Utilisation d'une électrode au carbone ayant une conductivité thermique > 145 W/m*K et un coefficient de dilatation thermique qui est accordé sur le coefficient de dilatation thermique du silicium pour la fabrication de silicium polycristallin.
